Europäisches Patentamt

European Patent Office

Office européen des brevets

(19)

(11) Publication number: **0 219 274**
A2

(12) # EUROPEAN PATENT APPLICATION

(21) Application number: 86307567.7

(22) Date of filing: 01.10.86

(51) Int. Cl.⁴: **A 61 G 12/00**

(30) Priority: 10.10.85 US 786261

(43) Date of publication of application:
22.04.87 Bulletin 87/17

(84) Designated Contracting States:
CH FR GB IT LI SE

(71) Applicant: The BOC Group, Inc.
85 Chestnut Ridge Road
Montvale, New Jersey 07645(US)

(72) Inventor: Koch, Robert J.
6204 Indian Mound Trail
McFarland Wisconsin 53558(US)

(72) Inventor: Wasson, John H.
501 West Pleasant Street
Portage Wisconsin 53801(US)

(74) Representative: Gough, Peter et al,
c/o THE BOC GROUP PLC Patent Department Chertsey
Road
Windlesham Surrey GU20 6HJ(GB)

(54) Medical apparatus with accessory mounting system.

(57) A medical apparatus comprising a frame of extruded structural members. One or more of the vertical structural members (16) is provided with a dovetail groove (44) extending substantially along its entire length. A clamp (42) that holds accessories to the medical apparatus has a pair of outward edges (46,50) that fit within the dovetail groove (44). By moving the outward edges apart, the clamp (42) can be forcefully retained at any desired position along the groove (44). Thus accessories can be attached directly to the structural members that form the frame of the medical apparatus in any desired position along that frame member (16).

FIG.1

EP 0 219 274 A2

Croydon Printing Company Ltd

MEDICAL APPARATUS WITH ACCESSORY MOUNTING SYSTEM

The present invention relates to a system for constructing an apparatus, preferably a medical apparatus, wherein the structural elements are specially constructed so as to receive clamps for holding auxiliary equipment at various locations convenient to personnel.

Medical apparatus, particularly infant care units, are presently constructed of elements such as vertical and horizontal frame members that are joined together to create an overall frame for the apparatus. Further, typically, such apparatus may include a rail system that in general comprises a horizontal rail for mounting accessories so that those accessories can be available for use by attending personnel. Typical accessories include flowmeters, pressure gauges, shelves and the like, which are needed within the convenient reach or view of such personnel.

A difficulty with the normal rail systems is, however, that they must be specially installed and, therefore, add additional expense to the apparatus, and also with most medical apparatus, space is at a premium and the horizontal rails have very limited locations on the apparatus for mounting. Accordingly, all accessories tend to be bunched together with the use of such rail systems.

It is an aim of the present invention to provide an apparatus which is specially constructed of frame members that provide considerable additional accessibility to accessories.

In the present invention, which is particularly advantageous for medical apparatus, the apparatus itself is constructed from vertical and horizontal frame members joined together to form a frame for the particular apparatus.

PG/NJP/8639 EPC

The vertical frame members are, however, constructed with a dove-tailed groove along at least essentially their entire length. The dove-tailed groove is formed during extrusion of the frame members and comprises two oppositely disposed transverse grooves; therefore, the grooves preferably run the entire length of the frame members.

Accessories can thus be mounted directly on the frame members and the need for add-on rail systems minimized or eliminated entirely. Most accessories are mounted by having special clamps having oppositely disposed, outward edges that fit within the transverse grooves of the frame members. A means is also provided to force the outward edges of the special clamps apart so that such edges become wedged inside the oppositely disposed, transverse grooves and are forcefully held thereagainst. The preferable means to expand the outward edges comprises a clamp having one outward edge fixed and the other edge movable about a pivot located intermediate the edges. The outward end of the movable edge fits within the corresponding transverse groove and by forcing the inward portion inwardly by means such as a threaded screw, the outward edge is moved outwardly to forcefully engage its transverse groove. A spring means may be included to normally bias the outward edge of the movable edge inwardly so that the accessory is removable when the threaded screw is rotated to move the inward edge outwardly about the pivot.

Accordingly, the considerable length of the vertical frames are available to mount accessories, and the accessories can be spread out for better use and/or viewing by personnel. The accessories can also be readily moved to new positions or, of course, removed altogether. Thus, by making the structural frame members themselves adaptable to receive accessories about at least there entire length, considerable additional convenience of use is achieved.

PG/NJP/8639 EPC

An embodiment of the invention will now be described, by way of example, with reference to the Figures to the accompanying diagrammatic drawings in which:-

FIG. 1 is a perspective view of a medical apparatus constructed in accordance with the present invention and having various accessories mounted thereon;

FIG. 2 is a perspective view of a portion of a frame member of the medical apparatus of FIG. 1;

FIG. 3 is a plan view, partly in cross-section, of an accessory clamp installed on the frame member of FIG. 2;

FIG. 4 is a side view of the accessory clamp of FIG. 3; and

FIG. 5 is an exploded view of an accessory clamp showing the details of its construction and assembly.

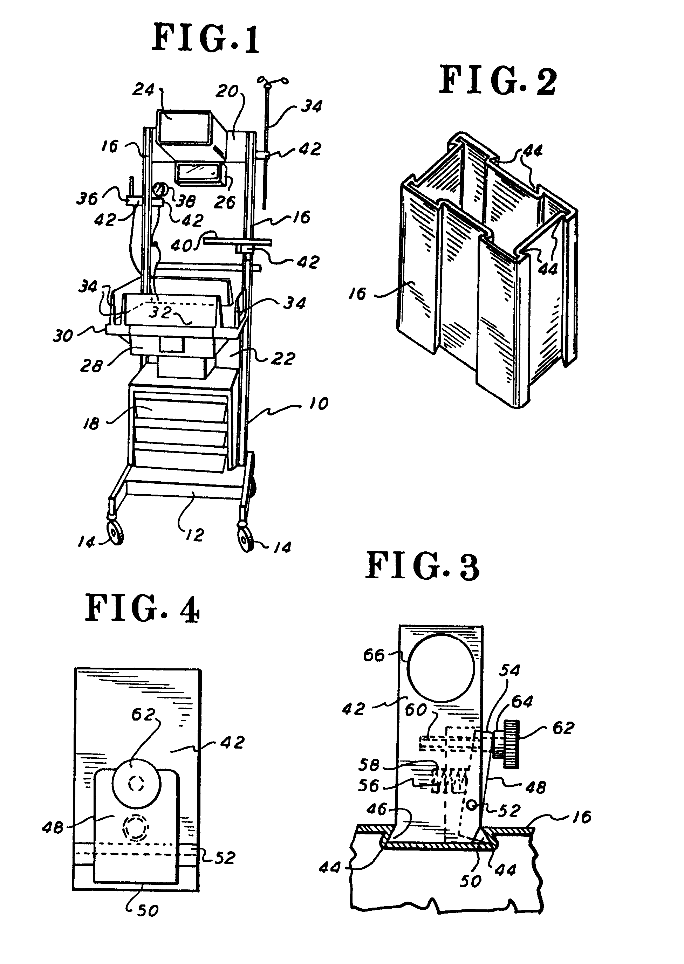

Referring now to FIG. 1, there is shown an isometric view of an infant care center constructed with frame members and having various accessories mounted thereon. It should be noted that for convenience an infant care center will be used as illustrative of one use of the invention; however, it will be seen that this construction is applicable to other types of apparatus where convenient location of accessories is a desirable feature.

As shown, the care center is basically comprised of a frame 10 which provides a freestanding unit for the care center. The frame 10 has a base 12 with wheels 14 so that the care center is easily movable. A pair of vertical frame members 16 are mounted upon base 12, which provide a means of support for other structural parts such as drawers 18 for containing items needed for attending to an infant. As will be explained, the vertical frame members 16 also are adapted for mounting various accessories.

PG/NJP/8639 EPC

Frame 10 also includes upper and lower cross-members 20 and 22, respectively. The upper cross-member 20 also may support other equipment, typically a heater 24 and a control module 26 containing the various controls to operate the care center.

Depending outwardly from lower cross-member 22 is a bed support 28 shown as a cantilever construction, which is the main support bearing the weight of the infant bed 30.

The infant bed 30 has a flat upper surface 32 upon which the infant lies and which is surrounded by guards 34 generally of clean plastic material, which contain the infant on the upper surface 32.

Typical accessories that are used with an infant care centre and which are mounted to vertical frame members 16 are bottle hanger 34 used to hold various drip bottles used for infusion, a flow meter 36, typically to monitor the flow of oxygen administered to the infant; a pressure gauge 38 used in association with a sphygmomanometer for determining blood pressure as well as other utilitarian devices such as a shelf 40. In common with all of the above accessories are their mounting to vertical frame members 16 by means of mounting clamps 42.

Turning to FIG. 2, there is shown a section, in perspective view, of a vertical frame member 16. The vertical frame member 6 has, in each face of its generally rectangular configuration, a pair of oppositely disposed transverse grooves 44 that form a dove-tail shaped groove that extends substantially along the entire length of the vertical frame member 16. The transverse grooves 44 are readily extruded into the aluminum extruded vertical frame members 16 and, as shown in FIG. 2, may be in all faces of the vertical frame members 16 or, alternately, in less than all of such faces.

**0219274**

It is preferably for purposes of this invention in the construction of medical apparatus, to utilize all four faces of a rectangular vertical frame member for ease of construction and to obtain the maximum available space for the auxiliary equipment.

In FIGS. 3 and 4 a plan view and side view of the mounting clamp 42 is shown. As noted, the mounting clamp 42 is installed in position attached to a vertical frame member rail 16. The mounting clamp has, at its face interfitting with transverse grooves 44, a fixed edge 46 that fits within one of the transverse grooves 44. The other forward edge of mounting clamp 42 comprises a movable lever 48 having a movable outer edge 50 adapted to fit within the other of the transverse grooves 44 and is pivoted on a pin 52 intermediate its outer edge 50 and its inner end 54. A spring 56 fits within recess 58 formed in mounting clamp 42 and biases the lever 48 such that the outer edger 50 is biased away from its engagement with the corresponding transverse groove 44. A screw 60 is threaded into internal threads formed in mounting clamp 42 and the free end of screw 60 has a knob 62 including a threaded washer 64. Mounting clamp 42 also may have a hole 66 through its body in order to receive and hold whatever accessory desired.

Accordingly, as may be seen in FIGS. 3 and 4, the mounting clamp 42 is positioned with respect to a vertical frame member 16 by having its fixed edge 46 and a movable outer edge 50 interfitted within the transverse grooves 44 thereof. Once in position, an operator can rotate knob 62 and corresponding screw 60 in the proper direction causing the washer 64 to bear against the outer surface of inner end 54 of movable lever 48. By forcing that inner end 54 inwardly with respect to mounting clamp 42, the movable outer edge 50 moves outwardly and forcefully engages its corresponding transverse groove. Sufficient turning of knob 64, therefore, readily wedges the mounting clamp 42 in position at any desired location along a vertical frame member 16 and yet is just as readily removed or
relocated to another position.

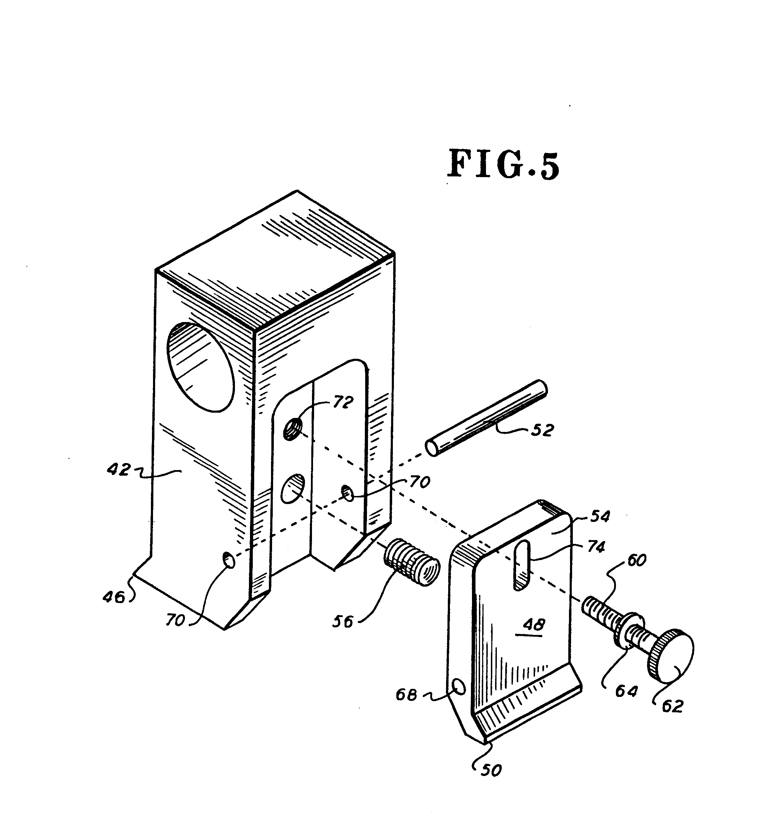

Finally, FIG. 5 is an exploded view of a mounting clamp 42 showing
its details of manufacture.  As noted, the forward surface of
mounting clamp 42 has a fixed edge 46 and a movable outer edge 50.
The latter is formed at the end of movable lever 48 which is pivoted
with respect to mounting clamp 42 by means of pin 52 that passes
through a hole 68 in movable lever 58 and which is held by holes 70
to the mounting clamp 42.

Spring 56 is shown as being fitted within recess 58 in mounting clamp
42 and presses outwardly against the inner surface of movable lever
arm 48 at a joint on the other side of its fulcrum from the movable
out edge 52, thus biasing that movable outer edge 50 inwardly toward
fixed edge 46.

Screw 60 threads into internal threads 72 in mounting clamp 42 and
passes through elongated hole 74 in the movable lever 48.  At the
free end of screw 60 is the knob 62 and washer 64 that bears against
the outer surface of the inner end 54 of mounting clamp 42.

By rotation of the screw 60, therefore, washer 64 pushes against
inner end 54 moving the inner end 54 inwardly toward mounting clamp
42 and against the face of spring 56.  Such movement moves movable
outer edge 50 outwardly and away from fixed edge 46, thus wedging
those edges into the corresponding transverse grooves of a vertical
frame member.

## CLAIMS

1. A medical apparatus having means for holding accessories (34,36,38,40) mounted thereto, said medical apparatus comprising vertical and horizontal frame members (16,20,22) joined together <u>characterised in that</u> at least one of said vertical frame members (16) comprises an extended metallic member having an internal dove-tail indentation (44) substantially along its length, and accessories having clamping means (42) having edges (46,50) adapted to fit within and outwardly grasp the said internal dove-tail indentation (44) for holding the accessories.

2. A medical apparatus as claimed in Claim 1, <u>characterised in that</u> said at least one of said vertical frame members (16) comprise a plurality of vertical frame members (16) and said accessories (34,36,38,40) are mounted in any of a plurality of locations along said dove-tail indentation (44).

3. A system for mounting accessories (34,36,38,40) to a medical apparatus, having vertical and horizontal frame members (16,20,22) <u>characterised in that</u>, at least one of said vertical frame members (16) has a pair of oppositely disposed, transverse grooves (44) substantially along its length, clamping means (42) attached to an accessory, said clamping means (42) having outwardly disposed edges (46,50) dimensioned to fit within said transverse grooves (44), said clamping means (42) further comprising means (48,60,62,64) to move at least one of said edges (50) outwardly to forcefully attach said clamping means (42) to the internal surface of said transverse grooves (44) of said at least one vertical frame member (16).

- 8 -

**0219274**

4. A system as claimed in Claim 3, <u>characterised in that</u> said clamping means (42) has one outwardly disposed edge (46) stationary and its other outwardly disposed edge (50) movable and said clamping means moves said movable edge (50) outwardly with respect to said stationary edge (46) to engage said transverse grooves (44).

5. A system as claimed in Claim 4, <u>characterised in that</u> said movable edge (50) is spring biased inwardly and further comprises a screw means (60) rotatable to move said movable edge (50) outwardly.

6. A system as claimed in Claim 4, <u>characterised in that</u> said movable edge (50) is pivotably mounted to said clamping means (42).

7. A medical apparatus for containing an infant in an infant bed (30), said apparatus having a frame of vertical and horizontal structural frame members (16,20,22), a support (28) for the infant bed (30) mounted on said frame, <u>characterised in that</u> at least one of said vertical frame members (16) has a transverse, dove-tailed groove (44) along substantially its entire length, mounting means (42) for mounting an accessory (34,36,38,40) to said at least one vertical frame member (16), said mounting means (42) adapted to hold the accessory and having a pair of oppositely disposed outward edges (46,50) adapted to fit within said dove-tailed groove (44), means (48,60,62,64) to displace one of said edges (50) outwardly to forcefully wedge said edges (46,50) within said transverse groove (44).

PG/NJP/8639 EPC

- 9 -

**0219274**

8.  A method of mounting an accessory (34,36,38,40) to a medical apparatus having a frame of vertical and horizontal members (16,20,22) <u>characterised by</u> the steps of:

a)  providing at least one of said vertical members (16) with an elongated dove-tailed groove (44) along substantially its entire length,

b)  inserting outward edges (46,50) of a clamp (42) carrying said accessory into the internal surface of the dove-tailed groove (44) at a selected position therealong;

c)  separating the distance between said outward edges (46,50) to forcefully wedge the outward edges (46,50) within the dove-tailed groove (44); and

d)  maintaining the outward edges (46,50) engaged within said dove-tailed groove (44) at said selected position.

FIG.1

FIG.2

FIG.4

FIG.3

0219274

2/2

0219274

# FIG.5